# EUROPÄISCHE PATENTSCHRIFT

(11) **EP 1 283 248 B1**
(45) Veröffentlichungstag und Bekanntmachung des Hinweises auf die Patenterteilung: **14.09.2011**
(21) Anmeldenummer: 02016859.7
(22) Anmeldetag: 30.07.2002
(51) Int. Cl.: C09D 11/00

(54) **Wässrige Magenta-Tinte für Ink Jet-Druck**
Aqueous magenta ink for inkjet printing
Encre magenta aqueuse pour l'impression par jet d'encre

(30) Priorität: 30.07.2001 DE 10137135
(43) Veröffentlichungstag der Anmeldung: 12.02.2003
(73) Patentinhaber: Pelikan Hardcopy Production AG, 8132 Egg (CH)
(72) Erfinder: Farkas, Rosalie, 8122 Binz (CH); Kazandjian, Isabelle, 8606 Greifensee (CH)
(74) Vertreter: Hagemann, Heinrich

(56) Entgegenhaltungen:
- EP-A- 0 911 374
- EP-A- 0 927 747
- EP-A- 1 063 268
- US-A- 6 048 390

## Beschreibung

Die Erfindung betrifft eine wäßrige Magenta-Tinte für den Ink Jet-Druck mit einem Gehalt an rotem Anthrachinon-Farbstoff, mindestens einem organischen Lösungsmitetl und gegebenenfalls weiteren üblichen Additiven.

Der Tintenstrahldruck oder auch Ink Jet-Druck ist ein berührungsloses, direktes Sofort-Druckverfahren ohne materielle Druckform, das auf thermischen oder elektrophysikalischen Prinzipien beruht. Die zu druckende Information wird dabei in Form einzelner Tintentropfen auf ein Druckmedium, in der Regel Papier, übertragen. Beim Continuous Jet-Verfahren erfolgt die Tropfenerzeugung aus einem kontinuierlichen Tintenstrahl, der mit statischem Überdruck aus einer Düse austritt. Angeregt, beispielsweise mittels eines Piezowandlers, zerfällt der Tintenstrahl sodann in Tropfen definierter Größe, die je nach Tintenart, unter Einwirkung eines magnetischen oder elektrostatischen Feldes in der gewünschten Weise auf dem Druckmedium platziert werden; nicht benötigte Tropfen werden unter Feldeinwirkung in eine Tintenrückführeinrichtung abgelenkt. Beim Drop on Demand-Verfahren erfolgt die Tropfenerzeugung demgegenüber "auf Bedarf", d. h. durch gezielte elektrische Impulsansteuerung eines Tropfengenerators, der dadurch die Abgabe eines Tintentropfens aus einer Düse bewirkt. Als Tropfengeneratoren dienen in der Regel Piezowandler, elektromagnetische oder elektrostriktive Wandler.

Eine besondere Stellung nimmt das sogenannte Bubble Jet-Verfahren ein. Die Tropfenerzeugung erfolgt hierbei thermisch durch kurzzeitiges Überhitzen eines in der Tinte angeordneten Heizelemetes. Die dabei entstehende Dampfblase verdrängt impulsartig die Tinte über dem Heizelement und führt dadurch zum Austritt eines Tropfens aus der zugeordneten Düse, der wiederum auf dem Druckmedium platziert wird.

Gegenüber den vorgenannten Verfahren entfallen beim Bubble Jet-Verfahren mechanisch bewegte Komponenten. Da Druckköpfe mit elektrothermischen Wandlern damit in der Regel kleiner und billiger hergestellt werden können als solche mit elektromechanischen Wandlerelementen, haben Bubble Jet-Drucker heute eine weite Verbreitung im Markt gefunden.

Die im Ink Jet-Druck verwendeten Farben sind regelmäßig dünnflüssige Tinten auf Wasser- und/oder Lösungsmittel-Basis mit einer Viskosität von etwa 1 bis 30 mPa.s. Sie enthalten neben der besonders beim Bubble Jet-Druck für die Dampfbildung wesentlichen Komponente Wasser, regelmäßig ein Gemisch aus verschiedenen organischen Lösungsmitteln (zum Teil bis zu acht Komponenten zur Steuerung der Trocknungszeit), und zwar Ketone (vorwiegend Methylethylketon), Acetate, Glykolether, Pyrrolidone, Glycole, Glycerin und Alkohole (z.B. Ethanol). Der Lösungsmittelanteil beträgt im allgemeinen bei der Drop on Demand-Verfahren etwa 15 bis 60 Gew.-%. Beim Continuous Jet-Verfahren kann der Lösungsmittelanteil auch bis zu 98 Gew.-% betragen. Die Farbmittel, die regelmäßig eine Menge von etwa 2 bis 6 Gew.-% der Ink Jet-Tinte ausmachen, sind vorwiegend lösliche Farbstoffe mit hoher Lichtechtheit und Thermostabilität, zum Teil aber auch unlösliche Pigmente einer Teilchengröße unter etwa 3 µm, möglichst unter 1µm.

Ist es erforderlich, eine elektrische Leitfähigkeit einzustellen, dann wird regelmäßig ein leitfähiges Salz zur Erzielung einer elektrischen Leitfähigkeit von möglichst mehr als 10⁴ Ω⁻¹cm⁻¹ herangezogen. Im Ruhezustand soll die Tinte in den Düsen auch über längere Zeit weder eintrocknen noch verkrusten. Im allgemeinen werden den Ink Jet-Tinten zur Einstellung einer ausreichenden Konservierung Biozide zugesetzt, damit sie auf keinen Fall beispielsweise von Bakterien oder Schimmel befallen werden können. Die Ink Jet-Tinten müssen mit den Materialien des Tintenbehälters, der Tintenzuleitung und des Schreibkopfes verträglich sein; sie dürfen nicht korrosiv sein und enthalten darum zum Teil auch Korrosionsinhibitoren. Weitere wichtige Parameter der Tinten für das Ink Jet-Verfahren sind die Viskosität, die Oberflächenspannung, die Leitfähigkeit und der pH-Wert. Je nach System müssen diese physikalischen Werte der Ink Jet-Tinte den Anforderungen des Einzelfalles angepaßt werden.

Es hat sich bei den derzeit für den Ink-Jet-Druck herangezogenen wäßrigen Magenta-Tinten gezeigt, daß deren Lichtechtheit verbesserungsbedürftig ist. Dieses Problem wurde auch bereits vielfältig behandelt. So wird es nach den Angaben der US 6 183 548 durch den Einsatz von Farbstoffen gelöst, die auf Metallkomplexen basieren. Die US 6 056 812 schlägt den Einsatz bestimmter Additive vor, so denjenigen von UV-Absorbern. Auch diese technischen Vorschläge sind im Hinblick auf eine optimale Lichtechtheit der jeweiligen Ausdrucke auf gängigen Trägermaterialien noch nicht voll zufriedenstellend.

Zum Stand der Technik ist noch auf die EP 0 927 747 A1 zu verweisen. Darin wird eine rote Magenta-Tintenzusammensetzung auf Wasserbasis beschrieben, die eine spezielle Anthrapyridonverbindung oder ein Salz davon enthält. Diese Tintenzusammensetzung soll eine gute Lichtechtheit aufweisen und einen weiten Bereich von Farbtönen im sichtbaren Bereich liefern, wenn sie zusammen mit gelben und blauen Tinten herangezogen wird. Es wird dort der Einsatz von Feuchthaltemitteln angesprochen, jedoch nicht von der erfindungsgemäßen Kombination von 6 bis 8 Gew.-% Ethylenglycol und 1-10 Gew.-% Harnstoff.

EP0911374 offenbart eine wässrige Tintenstrahldrucktintenzusammensetzung enthaltend a) 0,5-20 Gew. % Acid Red 82, b) 5-50 Gew. % Feuchthaltemittel, c) ein organisches Lösungsmittel wie zum Beispiel Ethylenglykol und d) ein hydrotropisches Mittel gewählt aus einer Liste enthaltend Harnstoff und Dialkylharnstoff.

EP1063268 offenbart eine wässrige Tintenstrahldrucktintenzusammensetzung enthaltend a) Farbstoff, z.B. Acid Red 82, b) 5 Gew. % Ethylenglykol, c) 5 Gew. % Harnstoff.

Der Erfindung lag die Aufgabe zugrunde, die eingangs bezeichnete wässrige Magenta-Tinte so weiterzubilden, dass sich bei ihrem Einsatz nach dem InkJet-Druck eine wünschenswerte Lichtechtheit der jeweiligen Ausdrucke ergibt.

Erfindungsgemäß wird diese Aufgabe durch eine wässrige Magenta-Tinte für den InkJet-Druck mit einem Gehalt an rotem Anthrachinon-Farbstoff und mindestens einem organischen Lösungsmittel dadurch gelöst, dass die Magenta-Tinte enthält: a) 0,2 bis 8 Gew.-% Acid Red 82 als Farbstoff, b) 6 bis 38 Gew.-% Ethylenglykol, Diethylenglykol und/oder Triethylenglykol, c) 1 bis 10 Gew.-% Harnstoff und/oder Mono- oder Dialkylharnstoff, wobei die Alkylgruppe 1 bis 4 Kohlenstoffatome aufweist, und d) Rest Wasser.

Im Stand der Technik sind vielfältige rote Farbstoffe als Bestandteil wäßriger Magenta-Tinten vorgeschlagen. Hierbei handelt es sich beispielsweise um Solvent-Red, aber beispielsweise um Acid Red 6, 8, 9, 13, 80, 83, 87, 89 und 265, wobei diese Aufzählung nicht erschöpfend ist. Allerdings ist im Stand der Technik das erfindungsgemäß eingesetzte Acid Red 82 nicht in Betracht gezogen. Es hat sich überraschenderweise gezeigt, daß sich aus der umfassenden Gruppe der roten AnthrachinonFarbstoffe das Acid Red 82 bezüglich der angestrebten Lichtechtheit der Ausdrucke auf gängigen Trägermaterialien, wie Papier, Gewebe, Filme und dergleichen, heraushebt. Vorzugsweise enthält die erfindungsgemäße Magenta-Tinte etwa 0,2 bis 7 Gew.-%, insbesondere etwa 0,4 bis 5 Gew.-%, Acid Red 82. Der Bereich von etwa 0,5 bis 4 Gew.-% ist besonders vorteilhaft.

Die Tinte gemäß der Erfindung enthält 6 bis 38 Gew.-% der Komponente b), insbesondere 8 bis 32 Gew.-%, und ganz besonders 22 bis 30 Gew.-%, und 1 bis 10 Gew.-% der Komponente c), insbesondere 3 bis 7 Gew.-%.

Die Alkylgruppe der Harnstoff-Derivate der Komponente c) ist vorzugsweise eine Methyl-, Ethyl-, Butyl- und/oder Propylgruppe, gegebenenfalls auch in Form der isomeren Verbindungen. Bevorzugt ist als Harnstoff-Derivat der N,N-Dimethylharnstoff. Im Rahmen der Erfindung erfüllen der Harnstoff und seine Derivate sowie die bereits angesprochenen mehrwertigen Alkohole der Komponente b die Funktion eines Feuchthaltemittels. Dieses liegt vorzugsweise in einer Menge von 18 bis 45 Gew.-% vor. Zusätzlich wirken Harnstoff und seine Derivate als Lösungsvermittler für Acid Red 82.

In Einzelfällen ist es vorteilhaft, daß die wäßrige Magenta-Tinte gemäß der Erfindung ein Verflüchtigungshilfsmittel enthält. Dieses ist eine leicht verdampfbare Flüssigkeit, die vorzugsweise mit Wasser mischbar ist. Beispielsweise kann es sich dabei um wassermischbares Aceton, aber insbesondere auch um niedere Alkohole handeln, insbesondere mit etwa 1 bis 4 Kohlenstoffatomen. Bevorzugt sind Methanol, Ethanol, Propanol, Isopropanol, Butanol, Pentanol und deren Isomeren. Besonders bevorzugt ist Isopropanol. Die hiermit verbundenen Eigenschaften zeigen sich insbesondere darin, daß die Tinte auf dem Papier schneller trocknet und die Schmierfestigkeit verbessert wird.

Das Verflüchtigungshilfsmittel liegt vorzugsweise in der erfindungsgemäßen Magenta-Tinte in einer Menge von 1 bis 12 Gew.-%, insbesondere 1 bis 7 Gew.-%, vor. Besonders bevorzugt wird der Bereich von 2,5 bis 4,5 Gew.-%. Wird der Wert von 1 Gew.-% unterschritten, dann setzt der gewünschte Verflüchtigungseffekt nicht hinlänglich ein. Ein Überschreiten der Obergrenze von 12 Gew.-% kann beim Ausstoß der Tinte aus den Düsen zur Bildung von unerwünschten Satellitentropfen führen und damit zu einer Verminderung der Druckqualität, insbesondere der Randschärfe und des Druckkontrastes.

In Einzelfällen enthält die erfindungsgemäße Magenta-Tinte als Farbmittel auch ein Pigment in einer Menge von 1 bis 10 Gew.-%, vorzugsweise von 1,5 bis 6 Gew.-%. Es sind alle gängigen organischen und anorganischen Pigmente geeignet, die im vorliegenden technologischen Bereich bereits genutzt werden. Bei den Farben werden zumeist organische Pigmente, wie Azo- (Pigment Yellow 74), Quinacridone-(Pigment Red 122), Kupferphthalocyan-Pigmente (Pigment Blue 15:3) verwendet. Für Schwarz wird zumeist Russ, ein anorganisches Pigment (Pigment Black 7), verwendet. Die Pigmentteilchengröße wird vorzugsweise auf unter 0,3 µm eingestellt, insbesondere unter 0,5 µm.

Da es sich bei dem Gegenstand der Erfindung um eine wäßrige Ink Jet-Tinte handelt, macht der Rest zu der Summe der vorstehenden quantitativen Angaben bis auf 100% Wasser aus.

Die erfindungsgemäße Ink Jet-Tinte hat, wenn der pH-Wert eine Rolle spielt, vorzugsweise einen pH-Wert von 5 bis 12, insbesondere von 6 bis 9. Ganz besonders wird in diesen Fällen ein Wert von 7 bis 8 eingestellt, um möglichst keine Korrosion im Drucksystem zu verursachen. Zur Einstellung des pH-Wertes können beispielsweise herangezogen werden Triethanolamin, Natronlauge, beliebige Säuren, Puffer, wie Ammoniumacetat und dergleichen.

Die erfindungsgemäße Ink Jet-Tinte kann auch Biozide zum hinlänglichen Konservieren enthalten. Als besonders vorteilhafte Biozide können angegeben werden: Acticid LA^{®} der Thor Chemie GmbH, DE, welches eine 3:1-Mischung von 5-Chlor-2-methyl-2H-isodiazol-3-on und 2-Methyl-2H-isothiazol-3-on sowie 2-Brom-2-nitropropan-1,3-diol enthält, sowie Preventol^{®} VP OC 3058 TM von Bayer AG, DE, welches 2-Octyl-2H-isothiazol-3-on und Benzylhemiformal/Benzylalkoholmono(poly)hemiformal enthält.

Um die Oberflächenspannung geeignet einzustellen, lassen sich grenzflächenaktive Mittel bzw. Tenside heranziehen. Tenside/Netzmittel wirken nach dem "Kopf/Schwanz"-Prinzip. Hierbei lagert sich der Kopf an die jeweilige Oberfläche an. Der Schwanz zeigt in das Lösungsmittel. Bevorzugt als Tenside sind Alkylphenol-PEG, PEG-Stearylether, Alkylpolyglycolside, Alkylsulfonate, ethoxylierte Fettalkohole, Alkylsulfopropylamoniumbetain, Alkylphenylsulfonat und/oder Alkylpyrrolidon.

Die erfindungsgemäßen Magenta-Tinten könnten auch weitere Lösungsmittel, d.h. Co-Lösungsmittel enthalten, wie n-Propanol, 2-Isopropyloxyethanol, Benzylalkohol, Butylrolacton, Diisopropanolamin, Ethanol, Ethylacetat, Isopropanol, n-Butanol.

In Einzelfällen ist es von Vorteil, wenn die erfindungsgemäße Magenta-Tinte Komplexbildner, so in Form des EDTA-Komplexbildners, enthält, um Schwermetallverunreinigungen, die auftreten können, zu eliminieren. Diese Verunreinigungen können zu nachteiligen Effekten führen. Darüber hinaus kann die Magenta-Tinte noch Viskositätsmodifizierer, wie acrylische und nicht-acrylische Polymere, enthalten.

Zu den oben genannten fakultativen Bestandteilen der erfindungsgemäßen Magenta-Tinte werden keine quantitativen Aussagen gemacht, weil der Fachmann im Rahmen rein handwerklicher Bemühungen die geeignete Konzentration an diesen Bestandteilen, wenn er sie einsetzt, problemlos ermitteln kann.

Die mit der Erfindung erzielbaren Vorteile erweisen sich nicht nur darin, daß die nach dem Ink Jet-Druck erhaltenen Ausdrucke die wünschenswert hohe Lichtechtheit zeigen. Vielmehr zeichnen sich diese auch durch einen klaren Farbton, hohe Dichte und hervorragende Schmierfestigkeit aus. Besonders geeignet sind die Magenta-Tinten gemäß der Erfindung als Fototinten für Piezo-Druckköpfe. Insbesondere ist die Lichtechtheit der Ausdrucke auch in den hellen Farben gegenüber Vergleichsprodukten des Standes der Technik verbessert.

Die Erfindung soll nachfolgend anhand eines Beispiels und Vergleichsbeispiels näher erläutert werden.

### Beispiel

Zum Vergleich wurde folgende erfindungsgemäße Rezeptur herangezogen:

| | |
|---|---|
| Wasser entmineralisiert | 36,28 Gew.-Teile |
| Biozid | 0,10 |
| Diethylenglycol | 21,00 |
| Butyldiglycol | 6,00 |
| Harnstoff | 5,00 |
| Triethanolamin | 0,70 |
| Tensid (2,4,7,9-Tetramethyl-5-decyne,4,7-diol) | 0,80 |
| Acid Red 82 (Flüssigformulierung)* | 30,00 |
| Acid Red 52 | 0,12 |
| Total | 100 |

| | |
|---|---|
| * Farbstoffgehalt: 10% (in Wasser) | |

Zum Vergleich wurde folgende Rezeptur des Standes der Technik herangezogen:

| | |
|---|---|
| Wasser entmineralisiert | 54,80 Gew.-Teile |
| Biozid | 0,10 |
| Diethylenglycol | 20,00 |
| Butyldiglycol | 4,50 |
| Harnstoff | 5,00 |
| Triethanolamin | 0,80 |
| Tensid (2,4,7,9-Tetramethyl-5-decyne,4,7-diol) | 0,80 |
| Reactiv Red 180 (Flüssigformulierung)* | 14,00 |
| Total | 100 |

| | |
|---|---|
| * Farbstoffgehalt: 15 % (in Wasser) | |

Nach folgender Methode wurde die Lichtechtheit von Ausdrucken dieser beiden Rezeptoren bestimmt:
Die Tinten-Patronen wurden jeweils mit Magenta-Tinten gemäß den beiden vorstehend bezeichneten Rezepturen gefüllt. Zu deren Ausdruck wurde ein handelsüblicher Ink Jet-Drucker herangezogen. Mit diesem wurden verschiedene Testbilder unterschiedlicher Farbsättigung (100%, 60% und 20%) erstellt. Die Testbilder wurden anhand einer üblichen Testmethode belichtet (48 Stunden, 500 W/m², Wellenlängenberich von 300 nm bis 800 nm bei 50°C). In der nachfolgenden Tabelle bedeutet ΔE den Farbabstand zwischen den belichteten und unbelichteten Bereichen der Testbilder. Aus dem Farbabstand läßt sich die Abnahme der optischen Dichte errechnen. Herangezogen wurden die folgenden Papiere, wobei in Klammern die Auflösung angegeben ist:
   Papier A: Normalpapier (Baumgartner Profi Copy) (720 dpi);
   Papier B: Epson Photo Paper (1440 dpi).

**Tabelle**

| | | **Papier A** | | | **Papier B** | | |
|---|---|---|---|---|---|---|---|
| Rezeptur | Farbsättigung | OD* | ΔE | % OD-Verlust | OD* | ΔE | % OD-Verlust |
| Lichtechte Rezeptur mit Acid Red 82 | 100% | 0,986 | 7,63 | 8 | 1,760 | 7,6 | 13 |
| Nicht lichtechte Rezeptur mit Acid Red 180 | 100% | 0,969 | 21,5 | 39 | 1,783 | 13,2 | 31 |
| Lichtechte Rezeptur mit Acid Red 82 | 60% | 0,587 | 13 | 14,3 | 0,846 | 19,7 | 26 |
| Nicht lichtechte Rezeptur mit Acid Red 180 | 60% | 0,543 | 25,6 | 51 | 0,797 | 30,7 | 53 |
| Lichtechte Rezeptur mit Acid Red 82 | 20% | 0,203 | 10,2 | 12 | 0,244 | 13,5 | 27 |
| Nicht lichtechte Rezeptur mit Acid Red 180 | 20% | 0,200 | 14,7 | 42,5 | 0,231 | 18,4 | 53 |

| | | | | | | | |
|---|---|---|---|---|---|---|---|
| * Optische Dichte am Anfang | | | | | | | |

Es zeigt sich im Ergebnis, dass anhand der erfindungsgemäßen Rezeptur Ausdrucke deutlich verbesserte Lichtechtheit erzielen lassen.

## Patentansprüche

1. Wässrige Magenta-Tinte für den Ink Jet-Druck mit einem Gehalt an rotem Anthrachinon-Farbstoff und mindestens einem organischen Lösungsmittel, **dadurch gekennzeichnet, dass** die Magenta-Tinte enthält:
a) 0,2 bis 8 Gew.-% Acid Red 82 als Farbstoff,
b) 6 bis 38 Gew.-% Ethylenglykol, Diethylenglykol und/oder Triethylenglykol,
c) 1 bis 10 Gew.-% Harnstoff und/oder Mono- oder Dialkylharnstoff, wobei die Alkylgruppe 1 bis 4 Kohlenstoffatome aufweist, und
d) Rest Wasser.

2. Magenta-Tinte nach Anspruch 1, **dadurch gekennzeichnet, dass** sie 0,4 bis 5 Gew.-% Acid Red 82 enthält.

3. Magenta-Tinte nach Anspruch 2, **dadurch gekennzeichnet, dass** sie 0,5 bis 4 Gew.-% Acid Red 82 enthält.

4. Magenta-Tinte nach einem der Ansprüche 1 bis 3, **dadurch gekennzeichnet, dass** sie 8 bis 32 Gew.-% Ethylenglykol, Diethylenglykol und/oder Triethylenglykol enthält.

5. Magenta-Tinte nach einem der Ansprüche 1 bis 4, **dadurch gekennzeichnet, dass** der Dialkylharnstoff in Form von N,N-Dimethylharnstoff vorliegt.

6. Magenta-Tinte nach einem der Ansprüche 1 bis 5, **dadurch gekennzeichnet, dass** sie ein Netzmittel, einen pH-Puffer, ein Pigment, einen Komplexbildner und/oder ein Biozid enthält.

7. Magenta-Tinte nach einem der Ansprüche 1 bis 6, **dadurch gekennzeichnet, dass** sie Butyldiglykol enthält.

8. Magenta-Tinte nach einem der Ansprüche 1 bis 7, **dadurch gekennzeichnet, dass** sie zur Einstellung eines pH-Werts von 6 bis 9 Triethanolamin enthält.

## Claims

1. Aqueous magenta ink for inkjet printing containing red anthraquinone colouring matter and at least one organic solvent, **characterised in that** the magenta ink includes:
a) 0.2 to 8 wt.% Acid Red 82 as the colouring matter,
b) 6 to 38 wt.% ethylene glycol, diethylene glycol and/or triethylene glycol,
c) 1 to 10 wt.% urea and/or mono- or dialkylurea, the alkyl group having 1 to 4 carbon atoms, and
d) remainder water.

2. Magenta ink as claimed in Claim 1, **characterised in that** it contains 0.4 to 5 wt.% Acid Red 82.

3. Magenta ink as claimed in Claim 2, **characterised in that** it contains 0.5 to 4 wt.% Acid Red 82.

4. Magenta ink as claimed in one of Claims 1 to 3, **characterised in that** it contains 8 to 32 wt.% ethylene glycol, diethylene glycol and/or triethylene glycol.

5. Magenta ink as claimed in one of Claims 1 to 4, **characterised in that** the dialkylurea is present in the form of N,N-dimethylurea.

6. Magenta ink as claimed in one of Claims 1 to 5, **characterised in that** it contains a wetting agent, a pH buffer, a pigment, a complexing agent and/or a biocide.

7. Magenta ink as claimed in one of Claims 1 to 6, **characterised in that** it contains butyldiglycol.

8. Magenta ink as claimed in one of Claims 1 to 7, **characterised in that** it contains triethanolamine to set a pH value of 6 to 9.

## Revendications

1. Encre magenta aqueuse pour l'impression à jet d'encre présentant une teneur en colorant d'anthraquinone rouge et au moins un solvant organique, **caractérisée en ce que** l'encre magenta contient :
a) 0,2 à 8 % en poids d'Acid Red 82 comme colorant
b) 6 à 38 % en poids d'éthylèneglycol, de diéthylèneglycol et/ou de triéthylèneglycol
c) 1 à 10 % en poids d'urée et/ou de mono- ou de dialkylurée, le groupe alkyle présentant 1 à 4 atomes de carbone, et
d) le restant étant de l'eau.

2. Encre magenta selon la revendication 1, **caractérisée en ce qu'**elle contient 0,4 à 5 % en poids d'Acid Red 82.

3. Encre magenta selon la revendication 2, **caractérisée en ce qu'**elle contient 0,5 à 4 % en poids d'Acid Red 82.

4. Encre magenta selon l'une quelconque des revendications 1 à 3, **caractérisée en ce qu'**elle contient 8 à 32 % en poids d'éthylèneglycol, de diéthylèneglycol et/ou de triéthylèneglycol.

5. Encre magenta selon l'une quelconque des revendications 1 à 4, **caractérisée en ce que** la dialkylurée est présente sous forme de N,N-diméthylurée.

6. Encre magenta selon l'une quelconque des revendications 1 à 5, **caractérisée en ce qu'**elle contient un réticulant, un tampon pH, un pigment, un complexant et/ou un biocide.

7. Encre magenta selon l'une quelconque des revendications 1 à 6, **caractérisée en ce qu'**elle contient du butyldiglycol.

8. Encre magenta selon l'une quelconque des revendications 1 à 7, **caractérisée en ce qu'**elle contient de la triéthanolamine pour le réglage d'un pH de 6 à 9.
